# EUROPÄISCHE PATENTANMELDUNG

(11) **EP 1 221 638 A2**
(43) Veröffentlichungstag der Anmeldung: **10.07.2002**
(21) Anmeldenummer: 01129875.9
(22) Anmeldetag: 14.12.2001
(51) Int. Cl.: G05B 19/05, G05B 19/042

(54) **Automatisierungssystem**

(30) Priorität: 27.12.2000 DE 10065401
(71) Anmelder: SIEMENS AKTIENGESELLSCHAFT, 80333 München (DE)
(72) Erfinder: Birzer, Johannes, 92551 Stulln (DE); Kiesel, Martin, 91099 Poxdorf (DE); Trummer, Georg, 92224 Amberg (DE); Wagner, Peter, 91217 Hersbruck (DE)

(57) **Zusammenfassung**

Die Erfindung betrifft ein Automatisierungssystem, bei dem eine Funktionalität von mindestens zwei Komponenten aus einer bedarfsweise regelfähigen Speicherprogrammierbaren Steuerung (SPS) und/oder einer drehzahl- und/oder lageregelnden Antriebssteuerung (D) und/oder einer komplexe Vorgänge regelnden Bewegungssteuerung (MC) integriert sind. Die somit aufgebaute einheitliche Steuerung (ICOMP) kann zusätzlich über einen einzigen, mit aller Funktionalität ausgestatteten Prozessor (CPU), weitere spezifische Schnittstellen (U7-U9), eine Einbindung von Engineering- (ICOMP_{ES}) und Runtimesystem (RS) in die einheitliche Steuerung (ICOMP), eine Webserverfunktionalität, eine Projektdatenkonfiguration über eine einzige Bedienhandlung und ein integriertes, umfassendes Datenmanagement (DM) verfügen.

## Beschreibung

Die Erfindung bezieht sich auf ein Automatisierungssystem, bei dem die Funktionalität von mindestens zwei Komponenten aus einer bedarfsweise regelfähigen speicherprogrammierbaren Steuerung und/oder aus einer drehzahl- und/oder lageregelnden Antriebssteuerung und/oder aus einer komplexe Vorgänge regelnden Bewegungssteuerung integriert sind.

Derartige Automatisierungssysteme sind beispielsweise aus der Druckschrift "Lenze IEC 1131 inside" bekannt. Dabei sind die Arbeitsweisen einer üblichen Speicherprogrammierbaren Steuerung, wie sie in der industriellen Automatisierung gang und gäbe ist, und die Funktionalität einer Antriebssteuerung, bei der Lage- und Drehzahlregelvorgänge vorgenommen werden, in einem einheitlichen System zusammengefasst. Vorkonfigurierte Antriebsfunktionen werden durch mehr oder weniger starre Funktionsbausteine in die Programmierumgebung eingebunden.

Über die Art und Weise, wie im Rahmen eines Engineerings die endgültige Runtime-Version zum Betrieb eines derartigen Systems tatsächlich realisiert wird, ist in diesem Dokument jedoch nicht weiter berichtet. Ferner ist aus dieser Druckschrift auch keine Anregung gegeben, hochkomplexe Steuerungen, wie sie beispielsweise numerischen Steuerungen zugrunde liegen, in ein solches System ebenfalls einzubinden.

In der Patentanmeldung PCT/DE00/00059 ist außerdem bereits vorgeschlagen worden, ein System für eine universelle Bewegungssteuerung zu schaffen, das sowohl Engineeringsystem wie auch Runtimesystem beinhaltet. Über die resultierende Hardwareausstattung ist dabei jedoch nichts ausgesagt.

Aufgabe der vorliegenden Erfindung ist es, ein Automatisierungssystem der eingangs genannten Art so auszubilden, dass dieses für universelle Zwecke einsetzbar ist, wobei die erforderliche Hardware durch eine umfassende einheitliche Verschmelzung von Automatisierungseinzelkomponenten gebildet werden kann.

Gemäß der Erfindung wird diese Aufgabe für ein Automatisierungssystem der eingangs genannten Art dadurch gelöst, dass für eine dadurch gebildete einheitliche Steuerung ein ebenfalls einheitliches Engineeringsystem mit einheitlicher Programmierbarkeit, sowie einheitlichem Runtimesystem mit zugeordnetem Sourcecode für Anwenderprogramme und mit gemeinsamem Datenmanagement vorgesehen ist, wobei das Datenmanagement im Engineeringsystem und/oder in der einheitlichen Steuerung integriert sein kann.

Technisch wird die Verschmelzung der Automatisierungseinzelkomponenten nicht nur durch eine Verschaltung von Hardwareeinzelkomponenten und einer einheitlichen Programmier- und Bediensicht gegenüber dem Anwender dargestellt, sondern es erfolgt auch eine durchgängige Integration der jeweiligen Runtimesysteme mit sämtlichen Schnittstellen und Funktionen. Das Runtimesystem der einheitlichen Steuerung ist sowohl in der Lage, zyklische Anforderungen, wie sie üblicherweise von einer Speicherprogrammierbaren Steuerung ausgeführt werden, als auch sequentielle, zum Teil äußerst komplexe Vorgänge zu steuern bzw. zu regeln, die gängigerweise von einer numerischen Steuerung übernommen werden.

Durch die einheitliche Verschmelzung der Automatisierungskomponente sowohl auf der Hardware- als auch auf der Softwareebene wird eine umfassende Flexibilität in der Programmierbarkeit erreicht. Da ein Gesamtanwendersourcecode in ein einheitliches Engineeringsystem für die einheitliche Steuerung geladen wird, stehen in dieser integrierten Engineeringworkbench alle Softwarewerkzeuge für die regelfähige Speicherprogrammierbare Steuerung, die drehzahl- und/oder lageregelnde Antriebssteuerung und die komplexe Vorgänge regelnde Bewegungssteuerung zur Verfügung. Hierzu gehören Programmierungs-, Debugger- und Inbetriebnahmewerkzeuge ebenso, wie auch die Möglichkeit zwischen unterschiedlichen Programmiersprachen zu wechseln.

Während der Engineeringphase ist es üblich, in einer für die Automatisierungseinzelkomponente gewohnten Programmiersprachkonvention die zu lösende Steuerungs- und/oder Regelungs- und/oder Bewegungsanforderung zu programmieren. In der einheitlichen Steuerung besteht die Möglichkeit, die Sprachkonvention je nach Anwendungsschwerpunkt frei zu wählen. So stehen dem Anwender beispielsweise folgende Möglichkeiten zur Verfügung:
1) Structured Text:
   Programmiersprachkonvention für einen erfahrenen System - und Applikationsprogrammierer.
2) Motion Control Chart:
   Programmiersprachkonvention für einen maschinenablauforientierten Lösungsansatz.
3) Function-Control-Chart:
   Programmiersprachkonvention für eine datenflussorientierte Programmiersicht.
4) Position-Time-Chart:
   Programmiersprachkonvention für eine Weg-Zeit-Diagramm orientierte Programmiersicht.

Diese unterschiedlichen Programmierfunktionen sind gegenseitig aufrufbar und beliebig mischbar, so dass dem Anwender je nach Teilaufgabe eine ideale Programmiersicht und -sprachwelt zur Verfügung gestellt werden kann.

Durch das homogene Engineering- und Runtimesystem der einheitlichen Steuerung steht dem Anwender weiterhin eine komfortable Programmierung von Ausnahmezuständen und Fehlerroutinen für die Gesamtautomatisierungskomponente zur Verfügung. In handelsüblichen drehzahl- und/oder lageregelnden Antriebssteuerungen werden allenfalls in einem festgelegten Schema parametrierbare Ausnahmezustandsreaktionen festgelegt. Mit einer einheitlichen Steuerung können nun in optimaler Art und Weise programmierbare, präzise aufeinander abgestimmte Ausnahmezustandsreaktionen für die Gesamtkomponente festgelegt werden.

Eine erste vorteilhafte Ausbildung der Erfindung ist dadurch gekennzeichnet, dass technologische Objekte für die einheitliche Steuerung integriert sind. Die technologischen Objekte können sowohl Drehzahl-, Positionier- und Gleichlaufachsen, als auch Nocken-, Geber-, Mess- und Kurvenscheibenfunktionen umfassen. Die zuvor starren Hardwareschnittstellen können aufgelöst und individuell, anwendungsbezogen, flexibel und feinstufig durch die Möglichkeiten der technologischen Objekte umgesetzt werden. In einer einheitlichen Programmphilosophie können diese Objekte instanziiert, frei kombiniert und in objektorientierter Programmierweise angesprochen werden. Insbesondere die Möglichkeit einer feinstufigen Ansprechbarkeit der technologischen Objekte stellt die Gesamtfunktionalität einer Automatisierungskomponente wesentlich umfassender dar, als wenn nur ein beschränkter Befehlsvorrat über starre Funktionsbausteine angeboten wird.

Eine weitere vorteilhafte Ausbildung der Erfindung ist dadurch gekennzeichnet, dass die einheitliche Steuerung einen einzigen Prozessor aufweist, der zum Ablauf aller Funktionalität vorgesehen ist. Ein derartiges Einprozessorsystem ist technisch relativ einfach implementierbar und in Anbetracht der hohen Komplexität der heute am Markt erhältlichen Prozessoren inzwischen für die Anwendung ausreichend leistungsstark. Dadurch, dass die einheitliche Steuerung eine Schnittstelle für ein Mensch-Maschine-Interface aufweist, ist es möglich, zur Steigerung des Komforts der Anzeige- und Eingabefunktionen des Automatisierungssystems eine diesbezügliche technische Maßnahme in der einheitlichen Steuerung zur Verfügung zu stellen.

Eine weitere vorteilhafte Ausbildung der Erfindung besteht darin, dass in der einheitlichen Steuerung zusätzlich die Funktionalität für ein Mensch-Maschine-Interface hinterlegt ist. Somit eröffnet sich die Möglichkeit mit applikationsspezifischen Mensch-Maschine-Interface-Geräten und/oder technologie- bzw. applikationsfreien Standardviewern und -browsern eine Maschinenbedienung und -beobachtung vorzunehmen. Hierzu kann sowohl die Ablage von Darstellungsoberflächen, Grafiken und Hilfeseiten im Datenspeicher des Gerätes gehören, als auch die Fähigkeit, mit allen gängigen Datenaustauschformaten von Standardbrowsern und -viewern mit anderen Geräten zu kommunizieren.

Dadurch, dass die einheitliche Steuerung mit einer integrierten Webserverfunktionalität ausgestattet ist, kann in relativ einfacher Weise ein Abfragen bzw. ein Updaten des Datenbestandes der einheitlichen Steuerung, einschließlich von zugehörigen Programmdaten, über eine Netzverbindung erfolgen. Über Inter- bzw. Intranet können mit Hilfe der Webserverfunktionalität Funktionen bzw. Daten der einheitlichen Steuerung angesprochen bzw. abgerufen werden.

Eine weitere vorteilhafte Ausbildung der Erfindung ist dadurch gekennzeichnet, dass für die Funktionalität von Speicherprogrammierbarer Steuerung und/oder Antriebssteuerung und/oder Bewegungssteuerung jeweils industriebranchenspezifische Technologieausprägungen vorgesehen sind. Hiermit ist eine Anpassungsoptimierung des Systems an spezielle Industrietechnologien, z.B. Drucktechnik, Textiltechnik, Verpackungstechnik usw., möglich. Der Anwender kann dabei aus dem in der einheitlichen Steuerung implizierten Technologieerfahrungsschatz des Herstellers der Technologiepakete profitieren.

Durch eine Einbindung des Engineeringsystems in die einheitliche Steuerung sind in vorteilhafter Weise identische Hardwareressourcen nutzbar.

Besonders vorteilhaft für die vorliegende Erfindung ist es auch, dass durch das gemeinsame Datenmanagement ausgehend von einer Erstdatenversion fortlaufend entsprechend aus jeweils beliebig stattfindenden dokumentierten Datenbestandsänderungen, insbesondere aus Benutzer- und/oder Systemdatenänderungen eine jeweils aktuelle Datenversion generierbar ist. Bei einem Automatisierungssystem mit derart komplexen Eigenschaften, das sowohl die Funktionalität üblicher Speicherprogrammierbarer Steuerungen, als auch von drehzahl- und/oder lagegeregelten Antriebssteuerungen, wie auch zusätzlich noch Bewegungssteuerungen beinhaltet, wird insbesondere durch das Hinzufügen der Bewegungssteuerung, die heutzutage meist durch eine numerische Steuerung realisiert wird, ein immenser Datenbestand erforderlich. Nur durch ein geschicktes Datenmanagement entsprechend der vorgeschlagenen Ausbildung der Erfindung ist es möglich, innerhalb eines begrenzten Speichervolumens die jeweils aktuelle Datenversion vorzuhalten. Dabei wird gerade durch ein derartiges inkrementelles Verfahren auch das Updaten über Inter- oder Intranetkommunikation ganz entscheidend erleichtert.

Bei einem solchen System ist es zusätzlich auch möglich, dass durch Rückführung der dokumentierten Datenbestandsänderungen vorangegangene Datenversionen wieder herstellbar sind. Auch hierin liegt eine ganz entscheidende Eigenschaft der vorliegenden Erfindung, da einem Servicetechniker beispielsweise damit ermöglicht wird, auf vorangegangene Datenversionen zurückzugreifen, sofern im laufenden System Unregelmäßigkeiten auftreten.

Eine weitere vorteilhafte Ausbildung der Erfindung besteht darin, dass über eine einzige Bedienhandlung in die einheitliche Steuerung eine zusammenhängende Projektdatenkonfiguration geladen wird, wobei diese mindestens Parametrierdaten und/oder Anwenderprogrammdaten und/oder Hardwarekonfigurationen und/oder Buskonfigurationen. Dem Anwender wird durch diese Option in zeitsparender Weise ermöglicht, sich zusammengehörige Projektdaten über eine einzige, leicht ausführbare Bedienhandlung beispielsweise aus dem Engineeringsystem oder von einem Datenserver zu transferieren und in die einheitliche Komponente einzuspielen. Mühsame, zeitaufwendige und fehlerbehaftete Einzelkonfigurationen entfallen. Somit steht dem Anwender unter minimalem Bedienaufwand ein Konfigurationswerkzeug zur Verfügung, dass ihm insbesondere bei ähnlichen Konfigurationen eine erhebliche Zeitersparnis einbringt. Es ist weiterhin denkbar, dass mit der einzigen Bedienhandlung ein Makro oder ein Skript ausgeführt wird, mit dem eine Reihe von automatischen Konfigurier- und Parametriervorgängen ausgelöst werden.

Ein vorteilhaftes Verfahren zum Betrieb eines Automatisierungssystems gemäß der Erfindung ist dadurch gekennzeichnet, dass das Engineering- und Runtimesystem durch die folgenden Schritte erzeugt wird:
a) Berücksichtigung der Laufzeiteigenschaften der beteiligten Automatisierungskomponenten,
b) entsprechend den Laufzeiteigenschaften erfolgt eine homogene Integration aller Steuerungsfunktionalitäten in das Engineering- und/oder in das Runtimesystem der einheitlichen Steuerung und
c) es wird dem Anwender eine Programmierbarkeit der Funktionalität der einheitlichen Steuerung bereitgestellt. Dabei werden in einem mehrschrittigen Verfahren zum einen der Kenntnisstand aus den Laufzeiteigenschaften der integrierten Steuerungen eingebracht, und in der resultierenden Bedienoberfläche wird einzig und allein die Gesamtprogrammierbarkeit der einheitlichen Steuerung in einer für den Anwender vorteilhaften Weise bereitgestellt.

Ein Ausführungsbeispiel der Erfindung ist in der Zeichnung dargestellt und wird im folgenden näher erläutert. Dabei zeigen:
- FIG 1: den schematischen Aufbau und die Verschaltung von Automatisierungskomponenten,
- FIG 2: den prinzipiellen Aufbau einer einheitlichen Steuerung,
- FIG 3: die integrierte Funktionalität einer einheitlichen Steuerung auf einem einzigen Prozessor,
- FIG 4: das Datenmanagement einer einheitlichen Steuerung und
- FIG 5: den Architekturaufbau der einheitlichen Steuerung.
- FIG 6: zeigt als Screenshot eine Systemkonfigurationsoberfläche der einheitlichen Steuerung.
- FIG 7: stellt in einem Screenshot einen Projekt Manager der einheitlichen Steuerung dar.
- FIG 8: zeigt als Screenshot einen Programmeditor der einheitlichen Steuerung in einer Structured-Text-Umgebung.
- FIG 9: zeigt als Screenshot einen Programmeditor für Kontaktplanprogrammierung.
- FIG 10: stellt als Screenshot einen Programmeditor der einheitlichen Steuerung in einer Motion-Control-Chart-Umgebung dar.
- FIG 11: zeigt als Screenshot einen Kurvenscheibeneditor der einheitlichen Steuerung.
- FIG 12: stellt als Screenshot einen Weg-Zeit-Diagrammeditor der einheitlichen Steuerung dar (Position-Time-Chart).
- FIG 13: zeigt als Screenshot einen Programmeditor der einheitlichen Steuerung für datenflussorientierte Programmierung (Function-Control-Chart).
- FIG 14: stellt als Screenshot ein Programmwerkzeug zur Inbetriebnahme der einheitlichen Steuerung dar.
- FIG 15: zeigt als Screenshot ein Programmwerkzeug zum Drive Design der einheitlichen Steuerung.

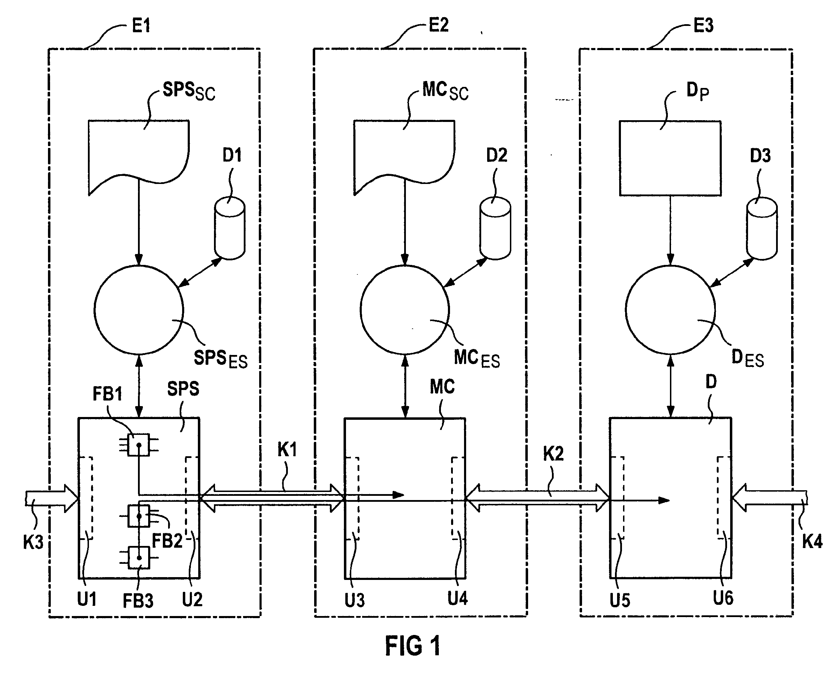

In der Darstellung gemäß FIG 1 sind schematisch der Aufbau und die Verschaltung von unterschiedlichen handelsüblichen Automatisierungskomponenten dargestellt. Zu erkennen ist die Verschaltung einer Speicherprogrammierbaren Steuerung SPS mit einer komplexe Vorgänge regelnden Bewegungssteuerung MC, sowie einer drehzahl- und/oder lageregelnden Antriebssteuerung (Drive Control) D. Mit diesen Geräten sind jeweils eigenständige Einheiten E1, E2 und E3 gebildet, die in FIG 1 durch ein jeweils gestrichelt dargestelltes Rechteck gekennzeichnet sind. Diese Einheiten E1, E2 und E3 beinhalten neben der Hardware auch Softwarekomponenten, auf die im folgenden noch eingegangen wird.

Während der Anlagenplanungs- und/oder Inbetriebsetzungsphase werden einheitenzugehörige Programmsourcecodes SPS_{SC}, MC_{SC} oder Parametrierdaten D_{P} eingegeben. Der jeweilige Programmsourcecode, durch ein geschweiftes Eingabesymbol angedeutet, bzw. der Parametrierdatensatz, durch ein Rechteck angedeutet, wird in jeweils zugehörige Engineeringsysteme SPS_{ES}, MC_{ES} und D_{ES} (durch Kreise symbolisiert) überspielt. Dies ist in FIG 1 durch jeweils einen Pfeil ausgehend von dem jeweiligen Sourcecode bzw. Parametrierdatensatz zu einem zugehörigen Engineeringsystem dargestellt. Als typische, beispielhafte Programmiersprachen gelten für die Speicherprogrammierbare Steuerung SPS die in der IEC 1131 und für die komplexe Vorgänge regelnde Bewegungssteuerung MC die in DIN 66025 festgelegten Sprachkonventionen.

Dem einzelnen Engineeringsystem ist jeweils ein Datenspeicher D1, D2 bzw. D3 zugeordnet, in dem unterschiedlichste Daten abgelegt und abgerufen werden können. Die Datenspeicher D1, D2 und D3 sind durch tonnenförmige Symbole angedeutet. Der entstehende bidirektionale Datenfluss zwischen den Engineeringsystemen SPS_{ES}, MC_{ES} und D_{ES} und den Datenspeichern D1, D2 und D3 ist in FIG 1 durch einen Doppelpfeil zwischen den jeweils zugehörigen Komponenten symbolisiert.

Das Engineeringsystem SPS_{ES}, MC_{ES} oder D_{ES} generiert ein Runtimesystem für die zugehörige Automatisierungskomponente. Während der Bearbeitungs- bzw. Erstellungsphase kann es vorkommen, dass das Engineeringsystem SPS_{ES}, MC_{ES} oder D_{ES} von der jeweiligen Komponente, d.h. der Speicherprogrammierbaren Steuerung SPS, der Bewegungssteuerung MC oder der Antriebssteuerung D, Daten benötigt. Daher ist in FIG 1 die Verbindung zwischen den Engineeringsystemen SPS_{ES}, MC_{ES} oder D_{ES} und den Automatisierungskomponenten (SPS, MC und D) jeweils durch einen Doppelpfeil dargestellt, um anzuzeigen, dass es sich hierbei um einen bidirektionalen Datenfluss handeln kann.

Zum Betreiben eines technischen Gerätes, das die Einzelautomatisierungskomponenten Speicherprogrammierbare Steuerung SPS, Bewegungssteuerung MC und Antriebssteuerung D beinhaltet, ist es notwendig, diese Komponenten untereinander auszusteuern bzw. abzustimmen. Für diese notwendige Gerätekommunikation sind an den Einzelkomponenten Schnittstellen U1 bis U6 eingerichtet, die das Gerät befähigen, eine externe Kommunikation aufzunehmen. Die Schnittstellen U1 bis U6 sind dabei als gestrichelt angedeutete integrale Bestandteile der Speicherprogrammierbaren Steuerung SPS, der Bewegungssteuerung MC und der Antriebssteuerung D angedeutet.

In der Darstellung gemäss FIG 1 sind die Speicherprogrammierbare Steuerung SPS und die Bewegungssteuerung MC mittels der Schnittstellen U2 und U3 über einen Datenkanal K1 (durch einen offenen, breiten Doppelpfeil symbolisiert) verbunden, sowie die Bewegungssteuerung MC und die Antriebssteuerung D mittels der Schnittstellen U4 und U5 über einen Datenkanal K2. Weitere Verbindungen über die Schnittstellen U1 und U6 sind mit Hilfe weiterer Datenkanäle K3 und K4 denkbar und sind an den Schnittstellen U1 und U6 durch einen Pfeil als Datenkanal angedeutet. Ebenso können die Einzelkomponenten SPS, MC und/oder D noch weitere, spezifische Schnittstellen aufweisen. Die Darstellung der Datenkanäle K2, K3 und K4 lehnt sich an die Darstellung des Datenkanals K1 an.

In der Speicherprogrammierbaren Steuerung SPS gibt es vordefinierte Funktionsbausteine FB1-FB3, die aus den Anwenderprogrammen aufgerufen werden können. In FIG 1 sind der Übersichtlichkeit halber nur die Funktionsbausteine FB1-FB3 dargestellt, es können jedoch weitere, nicht dargestellte Funktionsbausteine in der Speicherprogrammierbaren Steuerung SPS definiert sein. Über die Schnittstellen U2-U5 und die Hardwarekanäle K1 und K2 erfolgt eine Kommunikation unter den Komponenten E1-E3, die es der Speicherprogrammierbaren Steuerung SPS ermöglicht, über die fest definierten, starren Funktionsbausteine FB1-FB3 Funktionen der Bewegungssteuerung MC oder der Antriebssteuerung D aus Anwenderprogrammen heraus aufzurufen. Der Zugriff der Speicherprogrammierbaren Steuerung SPS über die Funktionsbausteine FB1-FB3 auf Funktionen der Bewegungssteuerung MC und/oder der Antriebssteuerung D ist in FIG 1 durch einen Pfeil dargestellt, der ausgehend von den Funktionsbausteinen FB1-FB3 über die Schnittstellen U2, U3 und den Datenkanal K1 bzw. den Schnittstellen U2, U3 und U5 und den Datenkanälen K1 und K2 auf die jeweils zugehörige Komponente (MC oder D) zeigt. Die Zugehörigkeit der Pfeillinien zu den Funktionsbausteinen FB1-FB3 ist durch einen zentralen, ausgefüllten Punkt in den Funktionsbausteinen FB1-FB3 auf den Linien angezeigt. Die Flexibilität der Funktionsbausteine für den Zugriff auf die Bewegungssteuerung MC und die Antriebssteuerung D ist durch die starren Schnittstellen U1-U9 begrenzt.

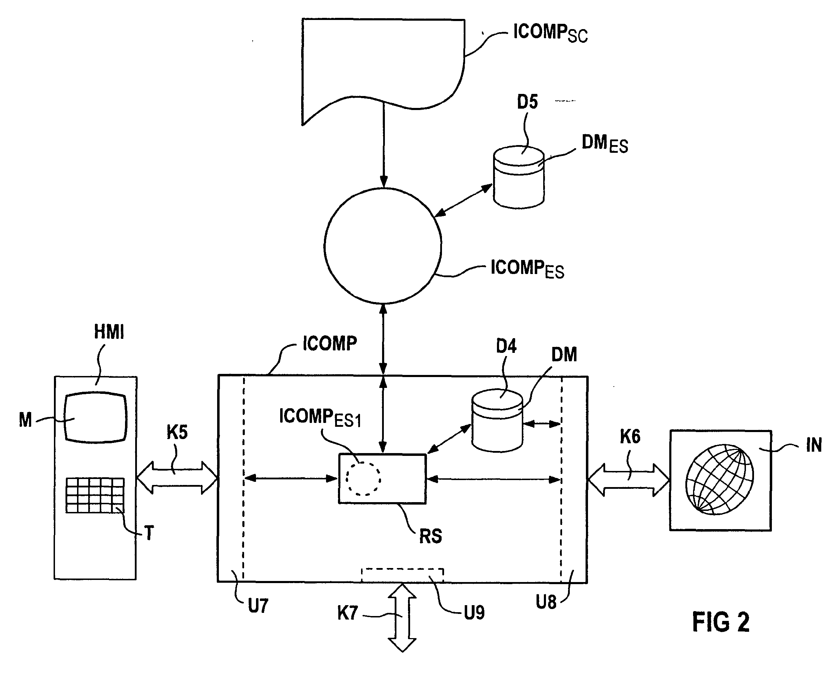

In der Darstellung gemäss FIG 2 ist eine einheitliche Steuerung ICOMP als integrierte Automatisierungskomponente dargestellt, die unterschiedlichste Funktionalität beinhalten kann. In das Engineeringsystem der einheitlichen Steuerung ICOMP_{ES} wird ein zugehöriger Programmsourcecode ICOMP_{SC} eingespielt. Dieses wird in FIG 2 durch eine Pfeilverbindung vom Sourcecode ICOMP_{SC} zum Engineeringsystem ICOMPES symbolisiert. Die Symbolik der jeweiligen Elemente ist aus FIG 1 wo immer möglich übernommen worden.

Da der Sourcecode die Fähigkeit besitzen muss, sämtliche Einzelkomponenten der einheitlichen Steuerung ICOMP anzusteuern, besitzt er einen erweiterten und in einer homogenen Art und Weise eingebrachten Funktionsumfang. Der Anwender hat die Möglichkeit in einer einheitlichen Programm- und Programmierumgebung das System einzurichten und zu beobachten.

Das Engineeringsystem der einheitlichen Steuerung ICOMP_{ES} überträgt das erzeugte Runtimesystem RS an die einheitliche Steuerung ICOMP. Alternativ kann das Engineeringsystem ICOMP_{ES1} auch in die Runtimeumgebung RS der einheitlichen Steuerung ICOMP eingebunden sein und somit vorteilhaft identische Hardwareressourcen nutzen. In FIG 2 ist diese Möglichkeit durch einen gestrichelt dargestellten Kreis in der Runtimeumgebung RS gekennzeichnet.

In der einheitlichen Steuerung ICOMP gibt es ein gemeinsames Datenmanagement DM, das auf einen Datenspeicher D4 zugreifen kann, der sämtliche im Runtimesystem RS benötigten Daten der einheitlichen Steuerung ICOMP beinhaltet. Alternativ oder zusätzlich kann das gemeinsame Datenmanagement DM auch an das Engineeringsystem der einheitlichen Steuerung ICOMP_{ES} angebunden sein. Eine solche Anbindung ist in FIG 2 durch einen Datenspeicher D5 mit einem dazugehörigen Datenmanagement DM_{ES} dargestellt. Der Datenspeicher D5, als auch das Datenmanagement DM_{ES} müssen dabei nicht zwingend dezentral im Engineeringsystem der einheitlichen Steuerung ICOMP_{ES} eingebracht sein, sondern es ist auch eine zentrale Engineering- bzw. Projektdatenspeicherung und -verwaltung, beispielsweise über Client-Serverfunktionen, denkbar. Insbesondere beim Einsatz von mehreren eventuell voneinander abhängigen, einheitlichen Steuerungen ICOMP kann ein zentrales Datenmanagement für alle Komponenten von Vorteil sein.

In FIG 2 ist die einheitliche Steuerung ICOMP mit Schnittstellen U7 und U8 dargestellt, die eine Verbindung zu externen Geräten über die Datenkanäle K5 und K6 herstellt. Die Schnittstelle U7 dient dem bidirektionalen Datenaustausch mit einem Mensch-Maschine-Interface HMI. Dieses ist in FIG 2 symbolisch durch einen Monitor M und eine Tastatur T angedeutet. Ein Anwender kann über ein Mensch-Maschine-Interface HMI sowohl mit applikationsspezifischen Mensch-Maschine-Interface-Geräten, als auch mit technologie- bzw. applikationsfreien Standardviewern und -browsern eine Maschinenbedienung und -beobachtung durchführen. Auch kann ein integriertes Engineeringsystem ICOMP_{ES} bei vorhandener Webserverfunktionalität über eine Inter- bzw. Intranetschnittstelle U8 nutzbar gemacht werden, so dass sämtliche Engineeringphasen über handelsübliche Eingabegeräte und Bedienoberflächen, wie z.B. Browser und Viewer, durchlaufen werden können. Ebenso ist es mit der Webserverfunktionalität möglich, z.B. Gerätehilfeseiten und -dokumentation aus dem Datenspeicher D4 der einheitlichen Steuerung ICOMP abzurufen. Eine weitere Möglichkeit besteht darin, im Datenspeicher D4 einen Verweis auf eine Internetseite abzulegen, auf der dann zentral auf eine Webseite mit jeweils aktuellen Hilfeseiten, Dokumentationsseiten, Treiber, Nutzerdiskussionsforen, aktiven Problemassistenten etc. zeigt. Somit kann von dem Hersteller bzw. Serviceprovider der einheitlichen Steuerung ein umfassender, mit dem Internet weltweit erreichbarer technischer Service zur Verfügung gestellt werden.

Generell besteht die Möglichkeit, den Zugriff auf das Inter- oder Intranet IN (durch eine Weltkugel angedeutet) über einen Datenkanal K6 mit der einheitlichen Steuerung ICOMP zu verbinden. Dabei ist es möglich, dass externe Komponenten einen bidirektionalen Datenverkehr mit dem Runtimesystem RS herstellen oder direkt über ein Datenmanagement auf den Datenspeicher D4 zugreifen können. Auch eine Verschmelzung der Schnittstellen U7 und U8 zu einer einzigen Schnittstelle ist denkbar, über die ein Beobachten und Bedienen der einheitlichen Steuerung ICOMP stattfinden kann.

In FIG 2 ist die einheitliche Steuerung ICOMP mit einer weiteren Schnittstelle U9 einschließlich Datenkanal K7 ausgestattet, die stellvertretend für weitere Prozessschnittstellen vorhanden ist. Die Prozessschnittstellen können beispielsweise Feldbusschnittstellen, Anschlüsse für digitale und/oder analoge Antriebe, als auch analoge und/oder digitale Ein- und Ausgaben umfassen.

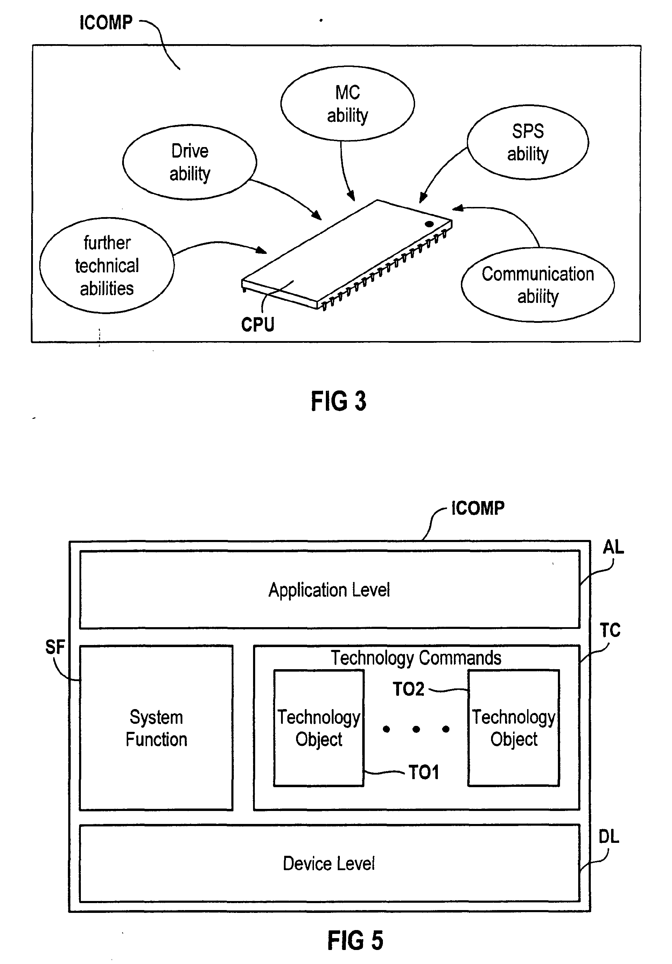

Die Darstellung gemäss FIG 3 zeigt die einheitliche Steuerung ICOMP in bauelement- bzw. funktionsspezifischer Weise. Dabei übernimmt ein einziger Prozessor CPU die gesamte Funktionalität, die beim eingangs genannten Stand der Technik von Einzelkomponenten mit jeweils Einzelprozessoren geleistet wurde. Die Funktionalität des Prozessors CPU kann im einzelnen eine Kombination von folgenden Einzelfunktionalitäten umfassen: Eine Kommunikationsfunktionalität, die die Webserverfunktionalität einschließen kann, in FIG 3 dargestellt durch "communication ability", eine Funktionalität einer Speicherprogrammierbaren Steuerung SPS, in FIG 3 dargestellt durch "SPS-ability", eine Funktionalität für eine Bewegungssteuerung, in FIG 3 dargestellt durch "MC-ability", eine Funktionalität für eine Antriebssteuerung, in FIG 3 dargestellt durch "Drive-ability", und eine Funktionalität für weitere Technologieausprägungen, in FIG 3 dargestellt durch "further technical abilities".

Somit kann eine Gesamtfunktionalität einer einheitlichen Steuerung ICOMP auf einem einzigen Prozessor CPU integriert und mit einer optimalen internen Struktur, sowie äußerst kurzen Verbindungsleitungen versehen werden. Der Prozessor ist in dieser Ausführung unter anderem in der Lage auf typische Funktionen der Speicherprogrammierbaren Steuerung SPS, der drehzahl- und/oder lageregelnden Antriebssteuerung D und/oder der komplexe Vorgänge regelnden Bewegungssteuerung MC zuzugreifen.

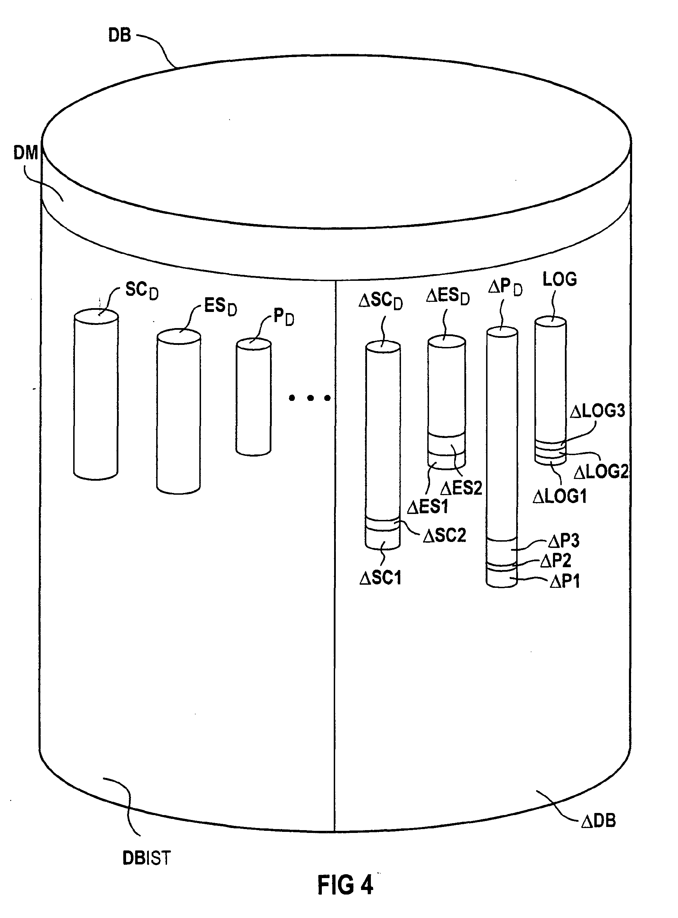

FIG 4 zeigt in der Symbolik ineinander verschachtelter, Datenbestände andeutender "Tonnen" einen Datenbestand DB mit einem integrierten Datenmanagement DM, sowie aktuellen Daten DBIST und abgespeicherten Datenbestandsänderungen ΔDB.

Werden am jeweiligen Sourcecodedatensatz SC_{D} und/oder am Engineeringsystemdatensatz ES_{D} und/oder am Parametrierdatensatz P_{D} und/oder an weiteren Datensätzen, die hier durch drei Punkte neben den Parametrierdatensätzen P_{D} angedeutet sind, Veränderungen vorgenommen, so werden diese durch das Datenmanagement DM erfasst. Nur die zu den jeweiligen Datensätzen SC_{D}, ES_{D} und P_{D} gehörenden Unterschiede ΔSC_{D}, ΔES_{D} und ΔP_{D} werden in einem Datenbereich ΔDB abgelegt. Zusätzlich können im Bereich der Datenbestandsänderungen ΔDB z.B. Benutzer - und/oder Systemdaten ΔLOG oder auch weitere sinnvolle Projektdatensätze abgelegt werden. Dies ist in FIG 4 im Bereich der Datenbestandsänderung ΔDB durch drei Punkte neben dem Datensatz ΔLOG angedeutet.

Ausgehend von einem Erstdatenbestand wird über das Datenmanagement DM im Bereich der aktuellen Daten DBIST immer der derzeitige Datenbestand gehalten. Sämtliche vorgenommene Änderungen sind dokumentiert im Bereich ΔDB abgelegt. Im Servicefall der einheitlichen Steuerung ICOMP ist es somit jederzeit möglich, sämtliche Systemänderungen nachzuvollziehen.

In FIG 4 sind Datenbestandsänderungen des Sourcecode ΔSC_{D} als ΔSC1 und ΔSC2, Datenbestandsänderungen des Engineeringsystems ΔES_{D} als ΔES1 und ΔES2, Datenbestandsänderungen des Parametriersystems ΔP_{D} als ΔP1 bis ΔP3 und Datenbestandsänderungen der System- und/oder Benutzerdaten ΔLOG als ΔLOG1 bis ΔLOG3 abgelegt.

Es ist weiterhin auch für das integrierte Datenmanagement DM prinzipiell möglich, dass Datenbestandsänderungen ΔDB in ihrer Gesamtheit erfasst und ablegt werden. Eine Aufteilung in Einzeldatensatzänderungen entfällt in diesem Fall.

Ein zusätzlicher Funktionsumfang des Datenmanagements DM umfasst die Möglicht, frühere Datenversionsstände anhand der Datenbestandsänderungen einfach und schnell wieder herzustellen. Insbesondere bei umfangreichen, jedoch fehlerbehafteten Änderungen am Datenbestand DB, kann auf eine frühere Version zurückgegriffen werden und ein Fortbetrieb der einheitlichen Steuerung ICOMP gewährleistet werden. Die fehlerhafte Änderung kann in einer späteren Sitzung am Engineeringsystem ICOMP_{ES} aufgerufen werden und die Fehlersuche fortgesetzt werden. Ein längerer Anlagenstillstand wird durch diese Maßnahme geschickt vermieden.

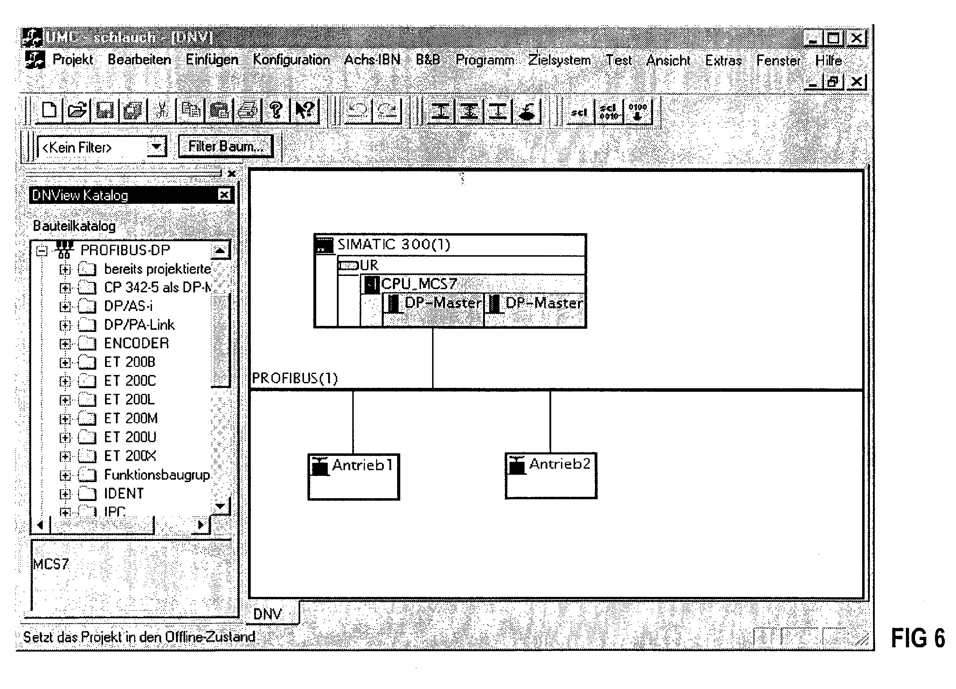

In FIG 5 ist der Architekturaufbau der einheitlichen Steuerung ICOMP schematisch dargestellt. Aus einer einheitlich homogen aufgebauten Anwendungsebene AL (Application Level) wird dem Anwender ermöglicht, auf Systemfunktionen SF (System Functions) und/oder auf Technologiebefehle TC (Technology Commands) zurückzugreifen. Die Technologiebefehle TC werden durch flexibel und feinstufig programmierbare, in objektorientierter Weise ansprechbare und instanziierbare Technologieobjekte TO1, TO2 (Technology Objects) repräsentiert. Weitere, nicht in FIG 5 dargestellte Technologieobjekte sind durch drei Punkte zwischen den Technologieobjekten TO1 und TO2 angedeutet. In der Geräteebene DL (Device Level) werden die Systemfunktionen SF und sämtliche Technologieobjekte in Hardwarefunktionen umgesetzt und ausgeführt.

Insbesondere die Darstellung der Technologiebefehle TC parallel zu den Systemfunktionen SF soll verdeutlichen, dass beide an der Geräteebene einwirken können. Das Konzept der Technologieobjekte TO1, TO2 stellt die für den Anwender wertvolle Flexibilität bereit. Die zuvor in nicht flexibler Art und Weise über eine starre Schnittstelle durch Funktionsbausteine FB1-FB3 der Anwendungsebene bereitgestellten Befehle und Funktionen haben somit nur einen eingeschränkten Befehls- und Funktionsvorrat verfügbar gemacht.

Mit Hilfe der feinstufig in Technologieobjekten TO1 und TO2 programmierbaren Technologiebefehle TC wird eine größtmögliche Flexibilität in vorteilhafter Weise bereitgestellt, die über die vorgegebenen Systemfunktionen SF hinausgeht.

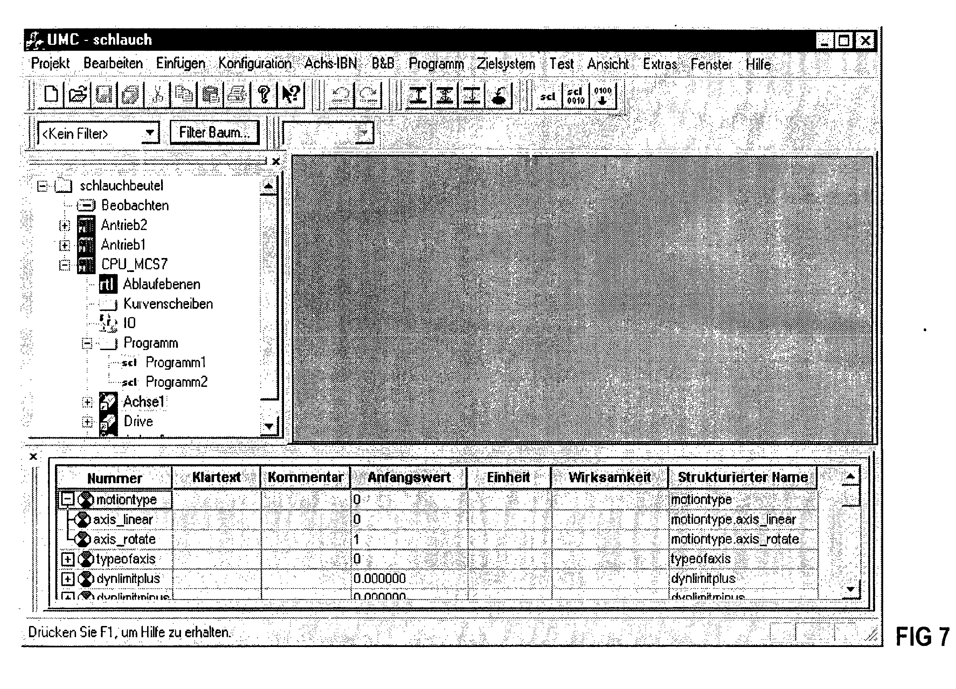

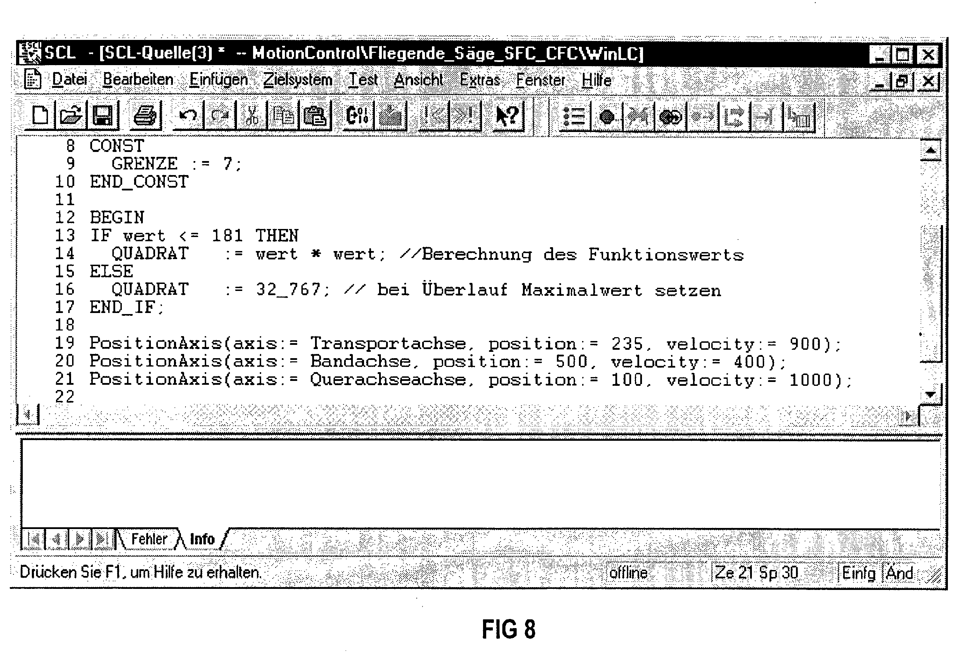

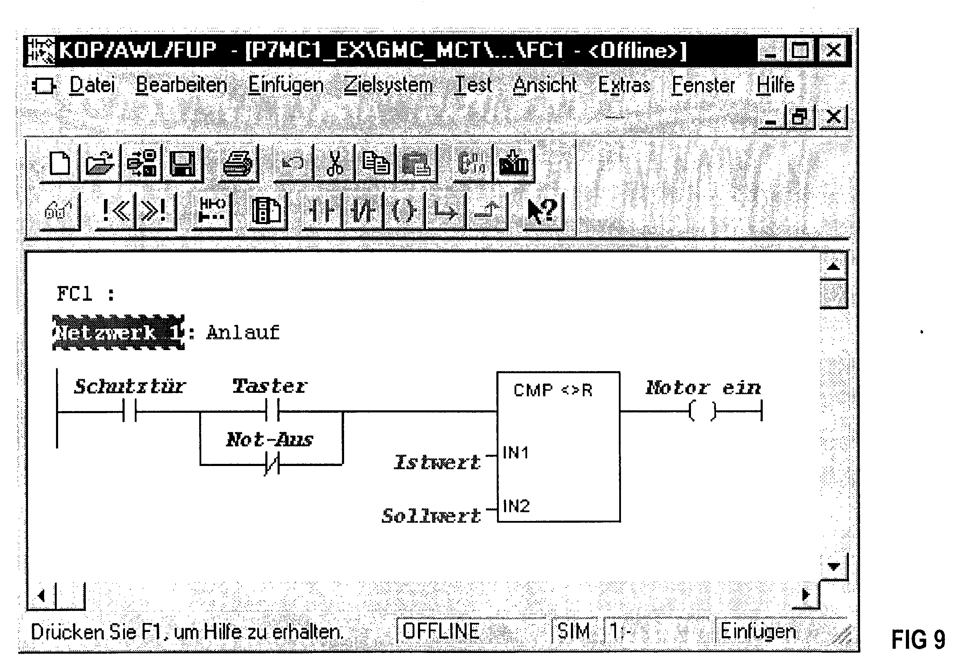

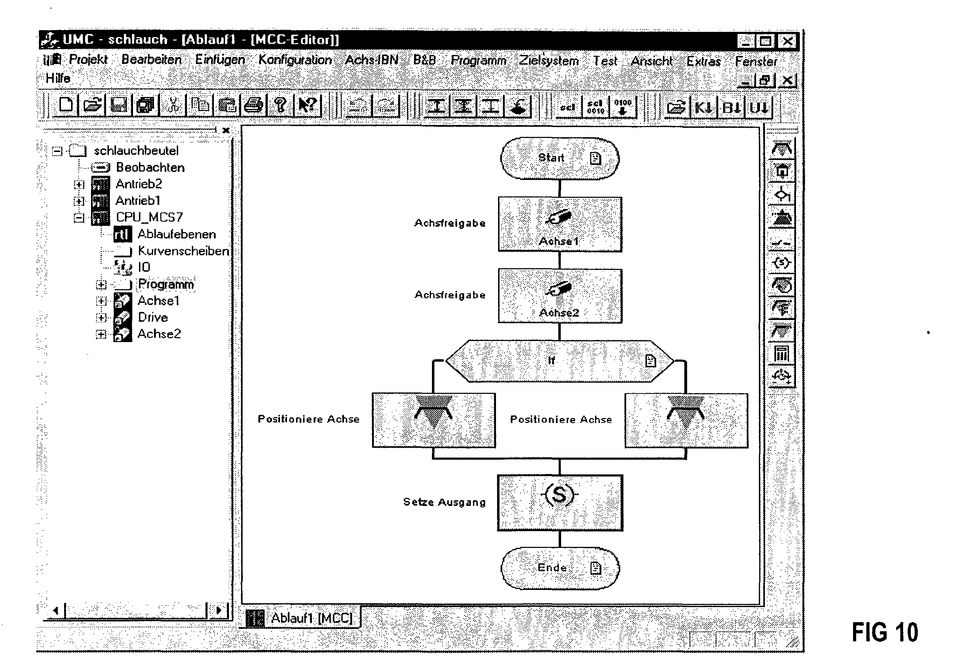

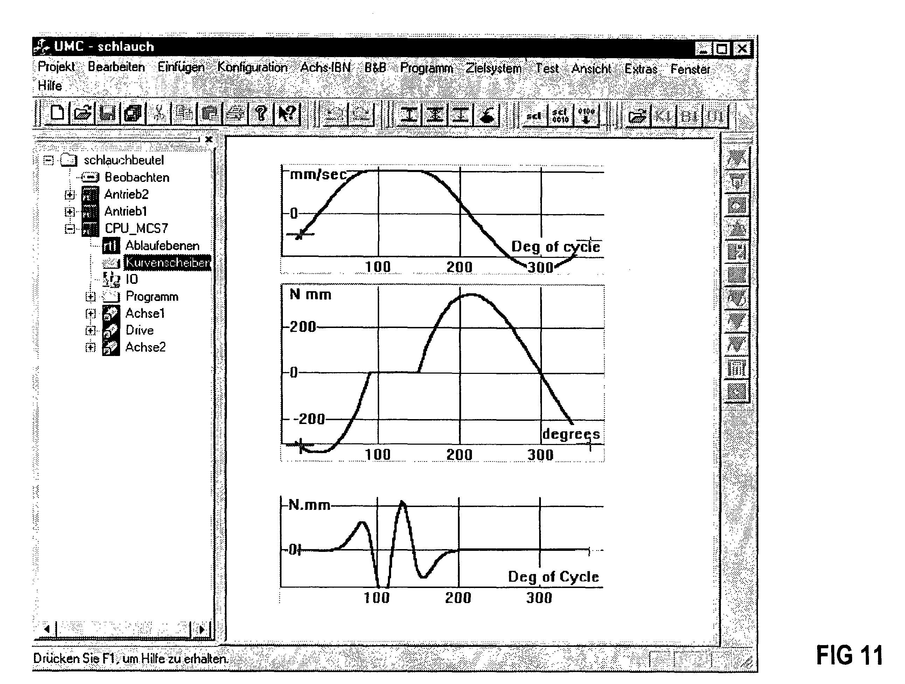

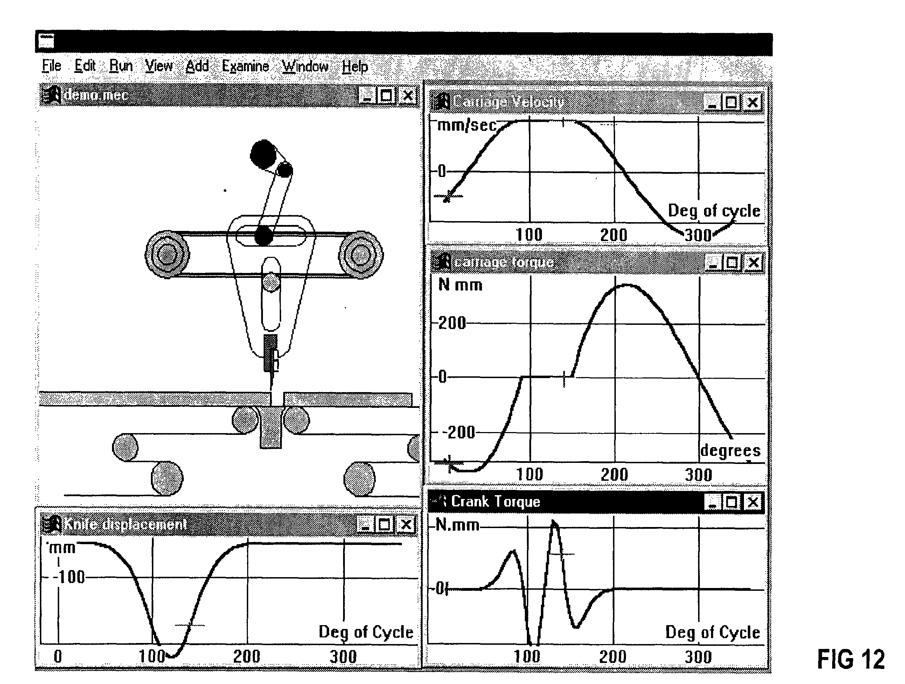

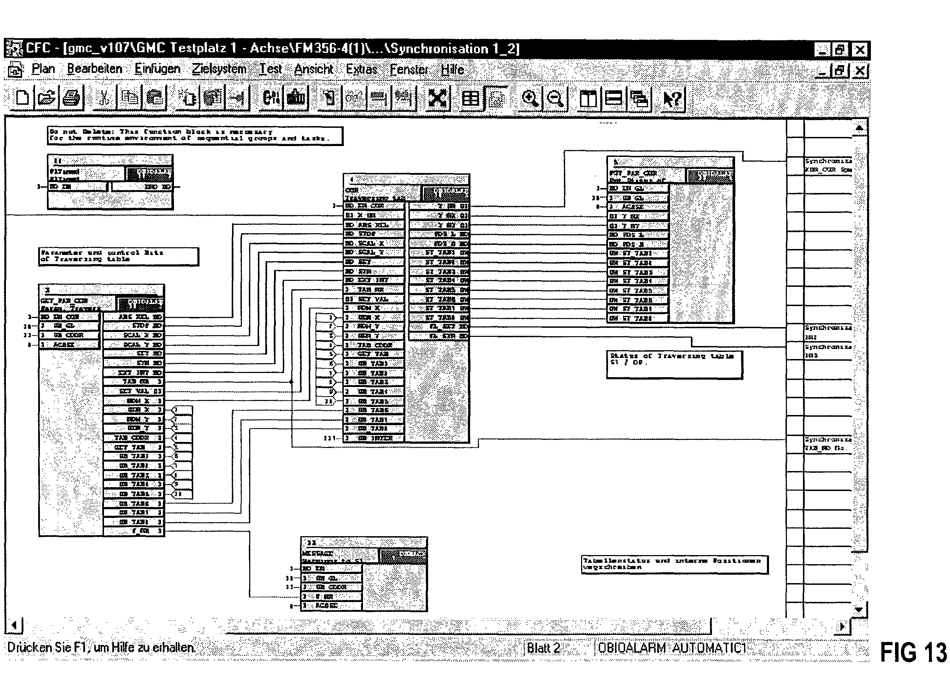

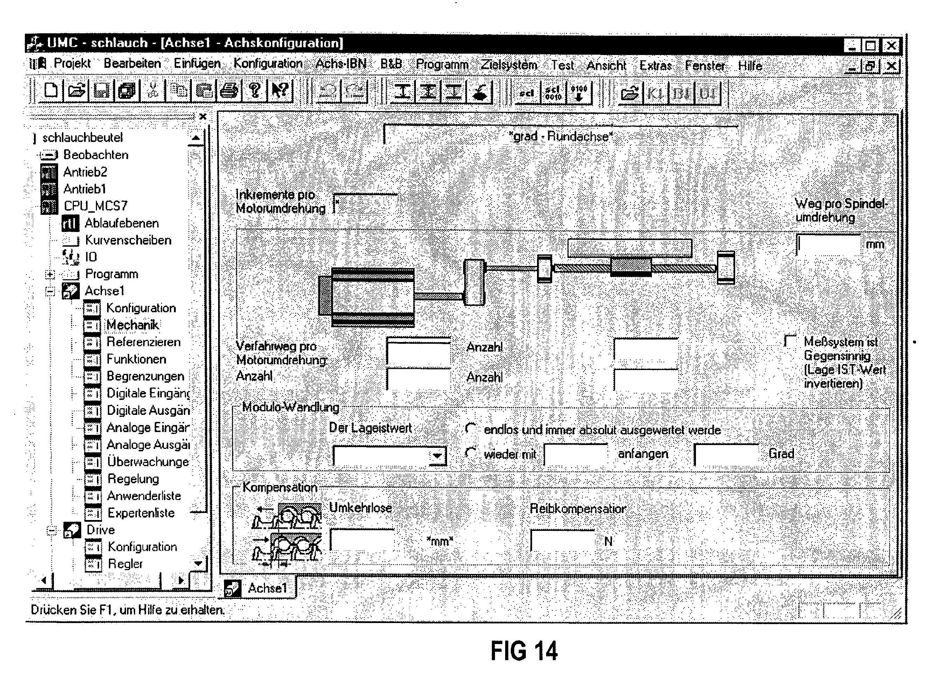

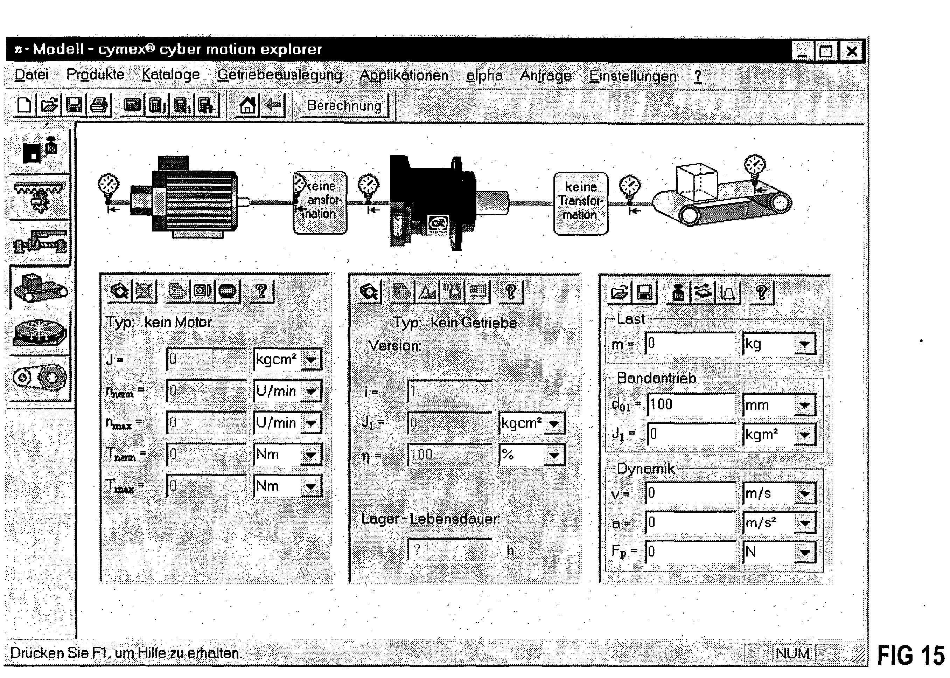

In den Darstellungen gemäss FIG 6 bis FIG 15 sind in Form von Screenshots aus der Engineeringumgebung ICOMP_{ES} der einheitlichen Steuerung signifikante Engineeringansichten (z.B. Programmeditoren) gezeigt. Diese dienen der Visualisierung der einzelnen Teilkomponenten des Engineeringsystems ICOMP_{ES} und sind als fotografische Ansichten zu betrachten.

Die in den Screenshots dargestellten Zeichen und Teilbilder sind als ergonomische Bedienoberfläche anzusehen, und daher zeigt sie einen beispielhaften Gesamtaufbau, der durch die weiter oben beschriebenen Prinzipien unterstützt wird. Auf die Bedienmöglichkeiten wird nicht weiter eingegangen, da sich diese durch die gewählte Fensterprogrammierung dem Anwender intuitiv anbieten.

Abschließend sei noch darauf hingewiesen, dass eine Dokumentation von Datenbestandsänderungen ΔDB Qualitätsrichtlinien sinnvoll unterstützen kann. Wird die einheitliche Steuerung ICOMP in einer industriellen Produktionsanlage eingesetzt, so können Anwenderänderungen jederzeit nachvollzogen werden und gegebenenfalls mit Fehlproduktionen korreliert werden. Da auch Uhrzeit und Datum aufgezeichnet werden können, ist definitiv festgelegt, welche Produktionsgüter von der Datenänderung betroffen waren.

## Patentansprüche

1. Automatisierungssystem, bei dem die Funktionalität von mindestens zwei Komponenten aus einer bedarfsweise regelfähigen Speicherprogrammierbaren Steuerung und/oder aus einer drehzahl- und/oder lageregelnden Antriebssteuerung und/oder aus einer komplexe Vorgänge regelnden Bewegungssteuerung integriert sind, **dadurch gekennzeichnet, dass** für eine dadurch gebildete einheitliche Steuerung (ICOMP) ein ebenfalls einheitliches Engineeringsystem (ICOMP_{ES}) mit einheitlicher Programmierbarkeit, sowie einheitlichem Runtimesystem (RS) mit zugeordnetem Sourcecode (ICOMP_{SC}) für Anwenderprogramme und mit gemeinsamem Datenmanagement (DM) vorgesehen ist, wobei das Datenmanagement (DM) im Engineeringsystem (ICOMP_{ES}) und/oder in der einheitlichen Steuerung (ICOMP) integriert sein kann.

2. Automatisierungssystem nach Anspruch 1, **dadurch gekennzeichnet, dass** technologische Objekte (TO1, TO2) für die einheitliche Steuerung (ICOMP) integriert sind.

3. Automatisierungssystem nach Anspruch 1 oder 2, **dadurch gekennzeichnet, dass** die einheitliche Steuerung (ICOMP) einen einzigen Prozessor (CPU) aufweist, der zum Ablauf aller Funktionalität vorgesehen ist.

4. Automatisierungssystem nach einem der vorstehenden Ansprüche, **dadurch gekennzeichnet, dass** in der einheitlichen Steuerung (ICOMP) zusätzlich Funktionalität für ein Mensch-Maschine-Interface (HMI) hinterlegt ist.

5. Automatisierungssystem nach einem der vorstehenden Ansprüche, **dadurch gekennzeichnet, dass** die einheitliche Steuerung (ICOMP) mit einer integrierten Webserverfunktionalität ausgestattet ist.

6. Automatisierungssystem nach einem der vorstehenden Ansprüche, **dadurch gekennzeichnet, dass** für die Funktionalität von Speicherprogrammierbarer Steuerung (SPS) und/oder Antriebssteuerung (D) und/oder Bewegungssteuerung (MC) jeweils industriebranchenspezifische Technologieausprägungen vorgesehen sind.

7. Automatisierungssystem nach einem der vorstehenden Ansprüche, **dadurch gekennzeichnet, dass** das Engineeringsystem (ICOMP_{ES}) in die einheitliche Steuerung (ICOMP) eingebunden ist.

8. Automatisierungssystem nach einem der vorstehenden Ansprüche, **dadurch gekennzeichnet, dass** durch das gemeinsame Datenmanagement (DM) ausgehend von einer Erstdatenversion fortlaufend aus jeweils beliebig stattfindenden dokumentierten Datenbestandsänderungen (ΔDB), insbesondere aus Benutzer- und/oder Systemdatenänderungen, eine jeweils aktuelle Datenversion (DBIST) generierbar ist.

9. Automatisierungssystem nach einem der vorstehenden Ansprüche, **dadurch gekennzeichnet, dass** durch Rückführungen der dokumentierten Datenbestandsänderungen (ΔDB) vorangegangene Datenversionen wiederherstellbar sind.

10. Automatisierungssystem nach einem der vorstehenden Ansprüche, **dadurch gekennzeichnet, dass** über eine einzige Bedienhandlung in die einheitliche Steuerung (ICOMP) eine zusammenhängende Projektdatenkonfiguration geladen wird, wobei diese mindestens Parametrierdaten (D_{P}) und/oder Anwenderprogrammdaten (SPS_{SC}, M_{SC}) und/oder Hardwarekonfigurationen und/oder Buskonfigurationen und/oder ein ausführbares Skript oder Makro enthalten kann.

11. Verfahren zum Betrieb eines Automatisierungssystems nach einem der vorstehenden Ansprüche, **dadurch gekennzeichnet, dass** das Engineering- (ICOMP_{ES}) und/oder Runtimesystem (RS) durch die folgenden Schritte erzeugt wird:
a) Berücksichtigung der Laufzeiteigenschaften der beteiligten Automatisierungskomponente,
b) entsprechend den Laufzeiteigenschaften erfolgt eine homogene Integration aller Steuerungsfunktionalitäten in das Engineering- (ICOMP_{ES}) und in das Runtimesystem (RS) der einheitlichen Steuerung (ICOMP) und
c) Bereitstellung einer einheitlichen Programmierbarkeit der Funktionalität der einheitlichen Steuerung (ICOMP).
